# DEMANDE DE BREVET EUROPEEN

(11) **EP 1 659 031 A1**
(43) Date de publication de la demande: **24.05.2006**
(21) Numéro de dépôt: 05292409.9
(22) Date de dépôt: 14.11.2005
(51) Int. Cl.: B60R 5/04

(54) **Dispositif d'aménagement d'un coffre de véhicule automobile et véhicule automobile équipe d'un tel dispositif**

(30) Priorité: 23.11.2004 FR 0412431
(71) Demandeur: PEUGEOT CITROËN AUTOMOBILES S.A., 78140 Velizy Villacoublay (FR)
(72) Inventeur: Le Dall, Christophe, 92150 Suresnes (FR)
(74) Mandataire: Domenego, Bertrand

(57) **Abrégé**

L'invention concerne un dispositif d'aménagement d'un coffre (1) de véhicule automobile, du type comprenant au moins un moyen d'habillage intérieur (8) formé par une pièce recouvrant une paroi latérale (7) du coffre, ladite pièce comprenant une partie supérieure (8a) sensiblement horizontale et une partie inférieure (8b) sensiblement verticale. Au moins un moyen d'habillage (8) détermine sur la paroi latérale adjacente, au moins un compartiment de rangement (10) muni d'au moins une ouverture (11) ménagée à la partie supérieure (8a) dudit moyen d'habillage (8).

L'invention concerne également un véhicule automobile équipé d'un tel dispositif.

## Description

La présente invention concerne un dispositif d'aménagement d'un coffre de véhicule automobile.

L'invention concerne également un véhicule automobile équipé d'un tel dispositif d'aménagement.

Les véhicules automobiles comportent des compartiments de rangement ménagés dans l'habitacle, comme par exemple sur des panneaux de porte ou au-dessous de la planche de bord ou éventuellement dans le plancher.

Cependant, l'espace alloué au rangement dans l'habitacle est réduit en particulier du fait de la généralisation des accessoires de sécurité, notamment des coussins gonflables, qui occupent des volumes importants dans l'habitacle.

De ce fait, les rangements accessibles depuis l'habitacle du véhicule sont de taille très réduite.

C'est pourquoi dans certains véhicules, des compartiments de rangement sont prévus dans le coffre et dans lesquels peuvent être logés des objets de petites et de moyennes dimensions. Ces compartiments sont par exemples situés sur les parois latérales du coffre dans la garniture recouvrant ces parois ou dans le plancher.

Ces compartiments aménagés dans le coffre présentent l'inconvénient de n'être accessibles depuis l'extérieur du véhicule, c'est à dire seulement lorsque le panneau de coffre ou le hayon est ouvert, ce qui limite bien évidemment l'utilisation de ce type de compartiments.

L'invention a pour but de résoudre ce problème de manière simple et économique.

L'invention a donc pour objet un dispositif d'aménagement d'un coffre de véhicule automobile, du type comprenant au moins un moyen d'habillage intérieur formé par une pièce recouvrant une paroi latérale du coffre, ladite pièce comprenant une partie supérieure sensiblement horizontale et une partie inférieure sensiblement verticale, caractérisé en ce que ledit au moins moyen d'habillage intérieur détermine sur la paroi latérale adjacente, au moins un compartiment de rangement muni d'au moins une ouverture ménagée à la partie supérieure dudit moyen d'habillage intérieur.

Selon d'autres caractéristiques de l'invention :
- ledit au moins compartiment s'étend latéralement à des moyens d'occultation du coffre,
- ledit au moins compartiment s'étend derrière un dossier de siège arrière,
- ledit au moins compartiment fait corps avec la pièce formant le moyen d'habillage intérieur,
- ledit au moins compartiment est rapporté sur la pièce formant le moyen d'habillage intérieur,
- la pièce formant le moyen d'habillage intérieur s'étend au droit d'un passage d'une roue du véhicule automobile,
- ladite au moins ouverture comporte au moins un élément de fermeture déplaçable par pivotement autour d'une articulation entre une position de libération de l'ouverture et une position d'obturation de cette ouverture, et
- l'articulation est formée par une ligne de plus faible épaisseur formant charnière,
- ladite au moins ouverture comporte un élément de fermeture déplaçable par coulissement entre une position de libération de l'ouverture et une position d'obturation de ladite ouverture.

L'invention concerne également un véhicule automobile comprenant un coffre formant un espace de rangement, caractérisé en ce que le coffre comporte un dispositif d'aménagement tel que précédemment mentionné.

D'autres caractéristiques et avantages de l'invention apparaîtront à la lecture de la description qui va suivre, donnée à titre d'exemple et faite en référence aux dessins annexés, sur lesquels :
- la Fig. 1 est une vue schématique, partielle et en perspective d'un coffre d'un véhicule automobile équipé d'un dispositif d'aménagement conforme à l'invention,

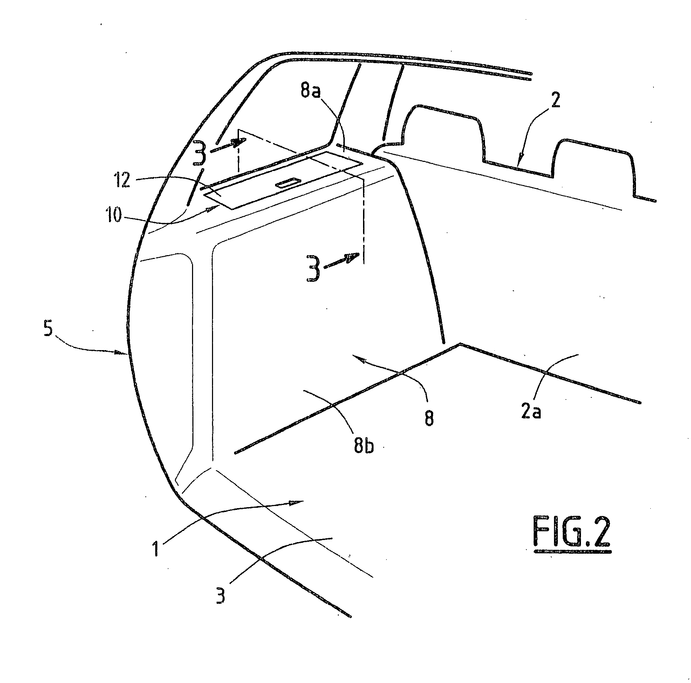

- la Fig. 2 est une vue schématique en perspective et à plus grande échelle d'un moyen d'habillage intérieur du coffre de la Fig. 1,
- la Fig. 3 est une vue schématique en coupe transversale selon la ligne 3-3 de la Fig. 2, et
- la Fig. 4 est une vue schématique en perspective d'une variante du moyen d'habillage intérieur du coffre du véhicule automobile.

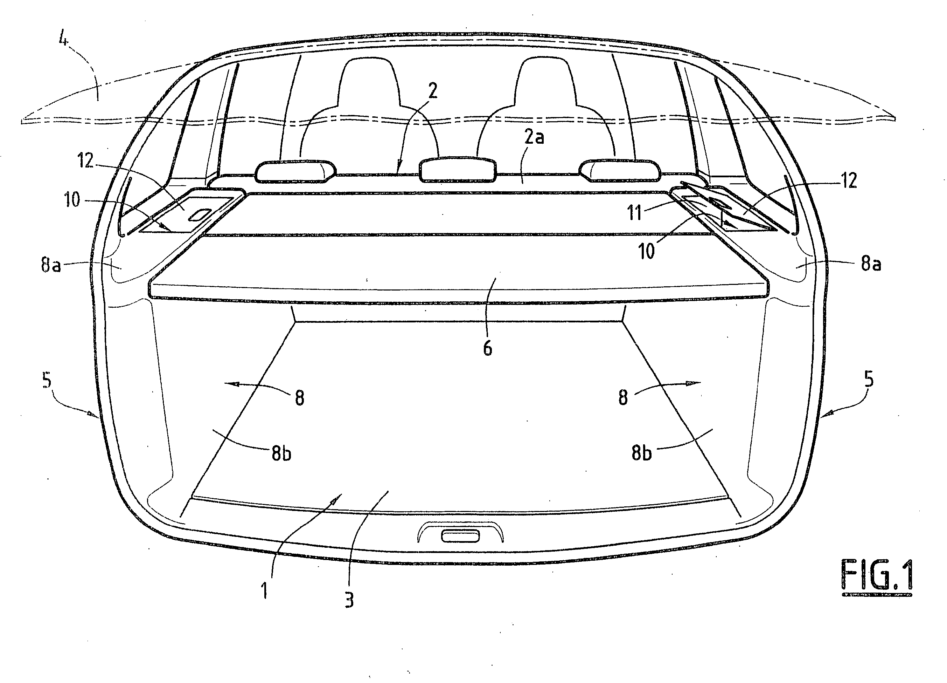

Sur la Fig. 1, on a représenté schématiquement un coffre 1 d'un véhicule automobile de type break ou monospace ou berline à trois ou à cinq portes.

De manière classique, le coffre 1 qui forme un espace de rangement d'objets est délimité par des dossiers 2a d'une rangée de sièges arrière 2, un plancher 3, un panneau de coffre 4 ou hayon et, de chaque côté, par deux flancs latéraux désignés chacun par la référence générale 5.

Le coffre 1 est également délimité, à sa partie supérieure, par des moyens d'occultation formés par une tablette arrière 6 fixe ou amovible selon le type de véhicule.

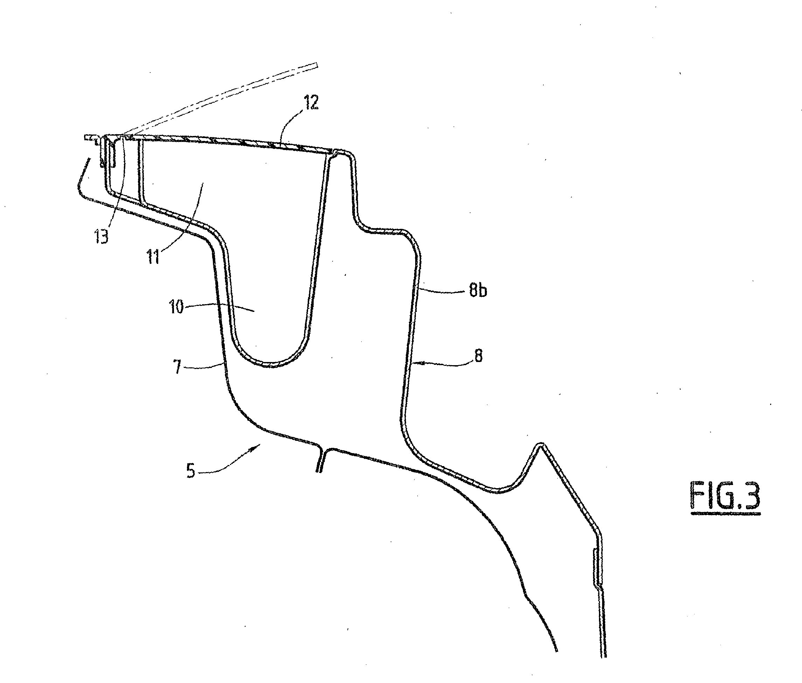

Comme montré à la Fig. 3, chaque flanc 5 est formé par une paroi latérale 7 qui détermine une partie de la caisse du véhicule automobile. Cette paroi latérale 7 est recouverte d'un moyen d'habillage intérieur 8 formé par une pièce, par exemple en matière plastique ou en tout autre matériau et obtenue par exemple par moulage ou par thermoformage et sa géométrie est définie par les contraintes de l'architecture du véhicule et notamment par la forme de la paroi latérale 7 dans laquelle est ménagé un passage de roue.

Selon l'invention, au moins un moyen d'habillage intérieur 8 d'une paroi latérale 7 détermine sur cette paroi latérale 7 au moins un compartiment de rangement 10.

Dans l'exemple de réalisation représenté sur la Fig. 1, le moyen d'habillage 8 de chaque paroi latérale 7 comprend un compartiment de rangement 10 disposé de chaque côté de l'espace de rangement délimité par le coffre 1.

Le compartiment de rangement 10 s'étend latéralement par rapport aux moyens 6 d'occultation du coffre 1 et derrière un dossier 2a d'un siège arrière 2.

Comme montré à la Fig. 3, le moyen d'habillage intérieur 8 est formé par une pièce qui comporte le compartiment de rangement 10 dont la forme épouse la géométrie de la paroi latérale 7 adjacente de façon à offrir un volume de rangement maximal. Dans l'exemple de réalisation représenté sur les figures, la pièce formant le moyen d'habillage intérieur 8 s'étend au droit d'un passage d'une roue.

De préférence, le compartiment 10 fait corps avec la pièce formant le moyen d'habillage intérieure 8.

Selon une variante, le compartiment 10 est rapporté sur la pièce formant le moyen d'habillage intérieur 8 par tout moyen approprié.

Ainsi que montré sur les figures, la pièce formant le moyen d'habillage intérieur 8 comprend une partie supérieure 8a sensiblement horizontale et une partie inférieure 8b sensiblement verticale.

Le compartiment de rangement 10 est muni d'au moins une ouverture 11 ménagée à la partie supérieure 8a de la garniture 8 correspondante. L'ouverture 11 est munie d'un élément de fermeture 12 qui, dans l'exemple de réalisation représenté sur les figures, est formé par un couvercle fixé par tout moyen approprié sur la partie supérieure 8a de la garniture 8 et qui est déplaçable par pivotement autour d'une articulation 13 entre une position de libération de l'ouverture 11 de façon à pouvoir accéder à l'intérieur du compartiment de rangement 10 et une position d'obturation de cette ouverture 11 pour fermer ledit compartiment de rangement 10. L'articulation 13 est constituée par exemple par une ligne de plus faible épaisseur formant une charnière ou par tout autre élément de type connu.

L'élément de fermeture 12 peut être formé par tout autre élément de fermeture qu'un couvercle pivotant, comme par exemple une trappe déplaçable par coulissement entre les deux positions.

Dans l'exemple de réalisation représenté à la Fig. 1, le moyen d'habillage intérieur 8 situé de chaque côté du coffre 1 comporte un compartiment de rangement 10 muni chacun d'un élément de fermeture 12. Le compartiment de rangement 10 peut s'étendre sensiblement sur toute la longueur du coffre et comporter une ou plusieurs ouvertures 11 munies chacune d'un élément 12.

Un seul moyen d'habillage intérieur 8 peut être équipé d'un compartiment de rangement 10.

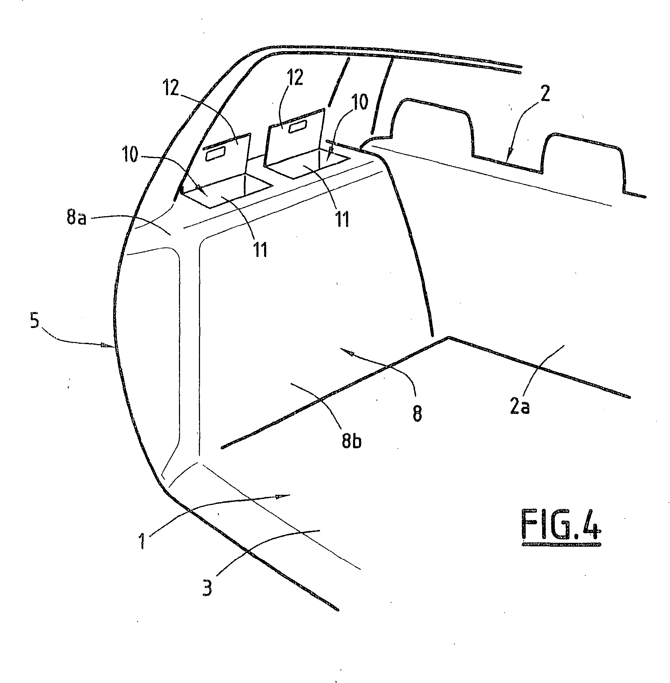

Selon une variante représentée à la Fig. 4, au moins un moyen d'habillage intérieur 8 est équipé de deux compartiments de rangement 10 dont chaque ouverture 11 est munie d'un élément de fermeture 12. Chaque moyen d'habillage 8 peut être équipé de deux compartiments de rangement 10. Le ou les compartiments 10 peuvent être également réfrigérés.

Comme montré par exemple à la Fig. 1, l'élément de fermeture 12 de chaque compartiment de rangement 10 est situé sur le côté du coffre 1 et notamment sur le côté de la tablette arrière 6 ce qui permet à un utilisateur de pouvoir accéder à ce compartiment de rangement 10 même dans le cas où la tablette arrière 6 recouvre le coffre 1 et cela sans avoir à déplacer cette tablette arrière 6.

L'aménagement selon l'invention présente également l'avantage de pouvoir accéder aux compartiments ou à chaque compartiment de rangement situés dans le coffre du véhicule automobile à la fois depuis l'habitacle et aussi depuis l'extérieur du véhicule, par le coffre.

## Revendications

1. Dispositif d'aménagement d'un coffre (1) de véhicule automobile, du type comprenant au moins un moyen d'habillage intérieur (8) formé par une pièce recouvrant une paroi latérale (7) du coffre (1), ladite pièce comprenant une partie supérieure (8a) sensiblement horizontale et une partie inférieure (8b) sensiblement verticale, **caractérisé en ce que** ledit au moins moyen d'habillage intérieur (8) détermine sur la paroi latérale (7) adjacente, au moins un compartiment (10) de rangement muni d'au moins une ouverture (11) ménagée à la partie supérieure (8a) dudit moyen d'habillage intérieur.

2. Dispositif selon la revendication 1, **caractérisé en ce que** ledit au moins compartiment (10) s'étend latéralement à des moyens (6) d'occultation du coffre.

3. Dispositif selon la revendication 1 ou 2, **caractérisé en ce que** ledit au moins compartiment (10) s'étend derrière un dossier (2a) d'un siège arrière (2).

4. Dispositif selon l'une quelconque des revendications 1 à 3, **caractérisé en ce que** ledit au moins compartiment (10) fait corps avec la pièce formant le moyen d'habillage intérieur (8).

5. Dispositif selon l'une quelconque des revendications 1 à 3, **caractérisé en ce que** ledit au moins compartiment (10) est rapporté sur la pièce formant le moyen d'habillage intérieur (8).

6. Dispositif selon la revendication 4 ou 5, **caractérisé en ce que** la pièce formant le moyen d'habillage intérieur (8) s'étend au droit d'un passage d'une roue du véhicule automobile.

7. Dispositif selon la revendication 1, **caractérisé en ce que** ladite au moins ouverture (11) comporte au moins un élément de fermeture (12) déplaçable par pivotement autour d'une articulation (13) entre une position de libération de l'ouverture (11) et une position d'obturation de ladite ouverture (11).

8. Dispositif selon la revendication 7, **caractérisé en ce que** l'articulation (13) est formée par une ligne de plus faible épaisseur formant charnière.

9. Dispositif selon la revendication 1, **caractérisé en ce que** ladite au moins ouverture (11) comporte un élément de fermeture déplaçable par coulissement entre une position de libération de l'ouverture (11) et une position d'obturation de ladite ouverture (11).

10. Véhicule automobile comprenant un coffre (1) formant un espace de rangement, **caractérisé en ce que** le coffre comporte un dispositif d'aménagement selon l'une quelconque des revendications 1 à 9.
